# EUROPÄISCHE PATENTSCHRIFT

(11) **EP 3 118 046 B1**
(45) Veröffentlichungstag und Bekanntmachung des Hinweises auf die Patenterteilung: **28.02.2018**
(21) Anmeldenummer: 16175858.6
(22) Anmeldetag: 23.06.2016
(51) Int. Cl.: B60K 26/02, B60T 7/02, G05G 1/487

(54) **BEDIENVORRICHTUNG EINES KRAFTFAHRZEUGS FÜR DIE MANUELLE BETÄTIGUNG EINES GASPEDALS UND EINES BREMSPEDALS**
OPERATIONAL DEVICE OF A MOTOR VEHICLE FOR THE MANUAL OPERATION OF AN ACCELERATOR AND A BRAKE PEDAL
DISPOSITIF DE COMMANDE D'UN VÉHICULE AUTOMOBILE POUR L'ACTIONNEMENT MANUEL D'UNE PÉDALE D'ACCÉLÉRATION ET D'UNE PÉDALE DE FREINAGE

(30) Priorität: 14.07.2015 DE 102015213131
(43) Veröffentlichungstag der Anmeldung: 18.01.2017
(73) Patentinhaber: KEHREL Aktiengesellschaft, 01983 Großräschen (DE)
(72) Erfinder: KNON, Bernhard, 65439 Flörsheim (DE)
(74) Vertreter: Hoefer & Partner Patentanwälte mbB

(56) Entgegenhaltungen:
- WO-A1-2011/033547
- DE-A1- 19 715 992
- DE-A1- 19 746 223
- DE-A1-102005 046 318
- LOEHLEN A: "QUERSCHNITTGELAEHMTE ALS AKTIVE TIELNEHMER AM STRASSENVERKEHR", MEDIZINISCH ORTHOPADISCHE TECHNIK, GENTNER VERLAG. STUTTGART, DE, Bd. 116, Nr. 3, 1. Mai 1996 (1996-05-01), Seiten 84-89, XP000591222, ISSN: 0340-5508

## Beschreibung

Die Erfindung bezieht sich auf eine Bedienvorrichtung eines Kraftfahrzeugs für die manuelle Betätigung eines Gaspedals und eines Bremspedals. Eine gattungsgemässe Bedienvorrichtung ist aus DE102005046318 bekannt. Aus dem Stand der Technik ist es bekannt, Kraftfahrzeuge so umzurüsten, dass diese ausschließlich manuell betätigbar sind. Hierfür werden Bedienvorrichtungen eingesetzt, die im Bereich einer Mittelkonsole des Kraftfahrzeugs befestigt sind und mit einem Gaspedal und einem Bremspedal verbunden werden. Die Bedienvorrichtung verfügt über ein multifunktionales Bedienteil, welches manuell verschwenkt werden kann. Durch ein Heranziehen in Richtung zum Körper des Fahrers erfolgt ein Niederdrücken des Gaspedals und somit ein Gasgeben, während bei einer Bewegung des Bedienteils von dem Körper des Benutzers weg ein Bremspedal betätigt wird.

Der Stand der Technik zeigt unterschiedlichste Konstruktionen. Diese sind nach dem beschriebenen Druck-Zug-Prinzip ausgebildet. Eine derartige Bedienvorrichtung wird in unterschiedlichste Modelle von Kraftfahrzeugen eingebaut. Die jeweilige Einbausituation muss dabei so gewählt werden, dass das Bedienteil durch die Bedienungsperson sowohl zum Bremsen als auch zum Gasgeben ausreichend weit bewegt werden kann. Bereits hierbei ergeben sich jedoch Einschränkungen, da die Sitzposition der Bedienungsperson, die Stellung des Fahrersitzes und/oder der Einbauort der Bedienvorrichtung nicht optimal sind. Ein weiterer Nachteil vorbekannter Konstruktionen liegt darin, dass diese einen sehr großen Bauraum benötigen und dass deshalb die Einstellbarkeit des Fahrersitzes beeinträchtigt wird. Ein weiterer, wesentlicher Aspekt liegt auch in der durch die Bedienungsperson aufzubringenden Kraft, insbesondere während des Bremsvorgangs. Hierbei ist es erforderlich, dass die Bedienungsperson mit der Hand bzw. dem Arm das Bedienteil ausreichend weit verschwenken kann. Auch hierbei ergeben sich vielfältige Einschränkungen, abhängig auch von der Innenraumgestaltung des Kraftfahrzeugs.

Der Erfindung liegt die Aufgabe zugrunde, eine Bedienvorrichtung der eingangs genannten Art zu schaffen, welche bei einfachem Aufbau und betriebssicherer Handhabbarkeit einen universellen Einsatz in unterschiedlichen Kraftfahrzeugen ermöglicht und eine ausreichende Kraftübertragung von der Hand der Bedienungsperson zu den Pedalen des Kraftfahrzeuges gewährleistet.

Erfindungsgemäß wird die Aufgabe durch die Merkmalskombination des Anspruchs 1 gelöst, die Unteransprüche zeigen weitere vorteilhafte Ausgestaltungen der Erfindung.

Die erfindungsgemäße Bedienvorrichtung umfasst zunächst ein Sockelteil, welches an dem Kraftfahrzeug befestigt werden kann. Dieses Sockelteil ist bevorzugterweise so ausgebildet, dass es im Bereich einer Sitzbefestigung des Kraftfahrzeugs verschraubt werden kann. Somit ist es nicht erforderlich, zusätzliche Befestigungslöcher oder ähnliches in dem Kraftfahrzeug vorzugsehen. Vielmehr können die Befestigungspunkte der Sitzbefestigung, beispielsweise der Sitzschienen, verwendet werden.

An dem Sockelteil ist erfindungsgemäß eine Platine gelagert, welche um eine im eingebauten Zustand horizontale erste Schwenkachse verschwenkbar ist. Die Platine ist dabei an ihrem unteren Bereich an dem Sockelteil gelagert. Die verschwenkbare Platine lagert an ihrem oberen Bereich um eine zweite Schwenkachse, welche im eingebauten Zustand ebenfalls horizontal ausgerichtet ist, schwenkbar ein Bedienteil. Das Bedienteil wird somit relativ zu der Platine verschwenkt, während zusätzlich die Möglichkeit gegeben ist, das Bedienteil zusammen mit der Platine relativ zu dem Sockelteil zu verschwenken.

Erfindungsgemäß ist das Bedienteil mit einem ersten Hebel verbunden, welcher somit zusammen mit dem Bedienteil relativ zu der Platine verschwenkbar ist. Die Verschwenkung erfolgt dabei um die zweite Schwenkachse, um welche auch das Bedienteil relativ zu der Platine verschwenkbar ist.

Am unteren Bereich der Platine ist ein Doppelhebel schwenkbar gelagert, welcher um die erste, untere Schwenkachse schwenkbar gelagert ist. Diese erste Schwenkachse erlaubt, wie erwähnt, eine Verschwenkung der Platine relativ zu dem Sockelteil. Der Doppelhebel weist einen ersten Schenkel und einen zweiten Schenkel auf.

Um bei einer Verschwenkung des Bedienteils relativ zu der Platine, durch welche ein Gasgeben erfolgt, den Doppelhebel mit dem ersten Hebel und damit dem Bedienteil zu koppeln, ist erfindungsgemäß eine Zugstange vorgesehen, welche den ersten Hebel mit dem ersten Schenkel des Doppelhebels gelenkig verbindet. Wenn die Bedienungsperson das Bedienteil zu sich bewegt und dabei das Bedienteil relativ zu der Platine verschwenkt, wird somit durch den ersten Hebel, welcher mit dem Bedienteil verbunden ist, und den Doppelhebel, dessen erster Schenkel mit der Zugstange gekoppelt ist, eine Zugkraft aufgebracht. Diese führt über den Doppelhebel zur Aufbringung einer Druckkraft auf eine Betätigungsstange, welche den zweiten Schenkel des Doppelhebels mit dem Gaspedal koppelt.

Durch die erfindungsgemäß vorgesehene Verwendung einer Zugstange kann diese relativ klein dimensioniert werden, da keine Gefahr eines Knickens oder Ausbiegens dieser Zugstange besteht. Beim Stand der Technik werden stets Druckstangen eingesetzt, die zusätzlich gelagert werden müssen und bei welchen eine ausreichend große Dimensionierung erforderlich ist. Die erfindungsgemäße Zugstange kann im Gegensatz hierzu klein dimensioniert werden und benötigt deshalb nur einen sehr geringen Bauraum. Dies führt dazu, dass die erfindungsgemäße Bedienvorrichtung platzsparend ausgebildet werden kann. Um ein Bremspedal zu betätigen, ist der mittlere Bereich der Platine gelenkig mit einer zweiten Betätigungsstange verbunden, welche wiederum mit dem Bremspedal gelenkig gekoppelt ist. Durch die Aufbringung eines Drucks auf das Bedienteil, durch welchen das Bedienteil vom Körper des Benutzers weggedrückt wird, wird somit das Bremspedal niedergedrückt. Die Verbindung der zweiten Betätigungsstange, welche die Platine mit dem Bremspedal verbindet, erfolgt im mittleren Bereich der Platine. Hierdurch ist es erfindungsgemäß möglich, den oberen Bereich der Platine abzuwinkeln, so dass sich dieser in Richtung zu der Bedienungsperson erstreckt. Insgesamt kann die Platine damit so gestaltet werden, dass der obere Bereich der Platine oberhalb eines Sitzes des Kraftfahrzeugs verläuft. Hierdurch wird der Verstellbereich des Kraftfahrzeugsitzes erheblich erweitert, während gleichzeitig die Möglichkeit geschaffen wird, das Bedienteil näher an dem Körper der Bedienungsperson zu platzieren. Auf diese Weise ist es erfindungsgemäß möglich, auch bei kurzen Armlängen der Bedienungsperson und/oder bei leicht eingeschränkter Beweglichkeit des Armes und der Hand der Bedienungsperson eine sichere Betätigung des Kraftfahrzeuges zu gewährleisten. Verbunden mit der abgewinkelten Ausgestaltung der Platine ist es erfindungsgemäß auch möglich, die Zugstange abgewinkelt auszubilden. Dies wäre bei Verwendung einer Druckstange nicht möglich, da diese nicht an die abgewinkelte Form der Platine angepasst werden könnte und somit eine Verstellung des Sitzes des Kraftfahrzeuges und damit eine Anpassung auch der Position des Bedienteils verhindern würde.

In besonders günstiger Ausgestaltung der Erfindung ist weiterhin vorgesehen, dass die Zugstange im Wesentlichen an der konvexen Seite der abgewinkelten Platine verläuft. Da die Platine im eingebauten Zustand mit ihrem unteren Bereich im Wesentlichen vertikal angeordnet ist und da der obere Bereich der Platine der Bedienungsperson und/oder dem Sitz der Bedienungsperson zugewandt ist, kann erfindungsgemäß die Zugstange an der der Bedienungsperson abgewandten Seite der Bedienvorrichtung vorgesehen werden. Auch hierdurch ergibt sich die Möglichkeit, die erfindungsgemäße Bedienvorrichtung platzsparend auszubilden.

Weiterhin ist es vorteilhaft, wenn der zweite Schenkel des Doppelhebels zum Sockelteil weisend angeordnet ist und der erste Schenkel des Doppelhebels im wesentlichen horizontal zum Gaspedal weisend positioniert ist. Hierdurch ergeben sich günstige Anlenkpunkte für die Zugstange, ohne dass die Baugröße der Bedienvorrichtung wesentlich vergrößert wäre und/oder die Verstellbarkeit eines Kraftfahrzeugsitzes beeinträchtigt würde.

Besonders günstig ist es, wenn das Sockelteil um eine im eingebauten Zustand der Bedienvorrichtung vertikale Achse schwenkbar montierbar ist. Dies ermöglicht eine winkelmäßige Optimierung der Verschwenkbarkeit der Platine und des Bedienteils. Es ist auch möglich, die beiden Betätigungsstangen, welche im montierten Zustand mit dem Gaspedal bzw. dem Bremspedal verbunden sind, zu gewährleisten.

Weiterhin ist es vorteilhaft, wenn am mittleren Bereich der Platine ein einstellbares Anschlagelement angeordnet ist, gegen welches die Zugstange in Anlage bringbar ist. Dieses einstellbare Anschlagelement dient dazu, die Verschwenkbarkeit des Bedienteils zu limitieren und auf diese Weise die maximal mögliche Gaspedalstellung einzustellen. Hierdurch kann sichergestellt werden, dass das Gaspedal ausreichend weit gedrückt werden kann, beispielsweise um eine Kick-Down-Funktion des Kraftfahrzeuges zu gewährleisten.

Erfindungsgemäß kann in günstiger Ausgestaltung vorgesehen sein, dass die Zugstange mit einem Federelement verbunden ist, welches zur Rückstellung des Bedienteils mit der Platine gekoppelt ist. Das Federelement unterstützt somit zusätzlich die Rückstellung des Gaspedals des Kraftfahrzeuges, verbunden mit einer Rückstellung des Bedienteils relativ zu der Platine.

Bei Fahrzeugen mit einem Automatikgetriebe ist es vielfach erforderlich, das Bremspedal zu betätigen, um den Wahlschalter des Automatikgetriebes einstellen zu können, beispielsweise von einer Parkposition in eine Fahrposition. Hierfür ist erfindungsgemäß vorgesehen, dass an dem Sockelteil ein Ratschenbereich ausgebildet ist, welcher mit einem Ratschenelement in Eingriff ist, welches schwenkbar an der Platine gelagert ist. Durch ein Lösen des Ratschenelementes kann somit der Druck auf das Bremspedal freigegeben werden. Hierzu weist das Bedienteil bevorzugterweise eine zusätzliche Funktionstaste auf. Diese ist, beispielsweise über einen Bowdenzug mit dem Ratschenelement gekoppelt.

Bei der erfindungsgemäßen Konstruktion sind die Zugstange und die Platine bevorzugterweise parallel zueinander angeordnet. Durch die Ausgestaltung der Zugstange und deren Dimensionierung ist es möglich, eine sehr geringe Breite der gesamten Bedienvorrichtung im eingebauten Zustand zu realisieren. Auch dies trägt zu einer universellen Einsetzbarkeit der erfindungsgemäßen Bedienvorrichtung in unterschiedlichsten Kraftfahrzeugen bei.

Im Folgenden wird die Erfindung anhand eines Ausführungsbeispiels in Verbindung mit der Zeichnung beschrieben. Dabei zeigt:
- Fig. 1: eine schematische Seitenansicht eines Ausführungsbeispiels der Erfindung,
- Fig. 2: eine Seitenansicht analog Fig. 1, der Rückseite der Bedienungsvorrichtung,
- Fig. 3, 4: stirnseitige Ansichten der erfindungsgemäßen Bedienvorrichtung gemäß den Fig. 1 und 2,
- Fig. 5: eine Seitenansicht im eingebauten Zustand, und
- Fig. 6: eine Seitenansicht, analog Fig. 5, in einer Bremsposition.

Die erfindungsgemäße Bedienvorrichtung umfasst ein Sockelteil 1, welches mittels eines Montagewinkels 20 an einem Kraftfahrzeug, beispielsweise einer Sitzverstellschiene, befestigt werden kann.

Das Sockelteil 1 weist eine erste Schwenkachse 2 auf, welche im eingebauten Zustand im Wesentlichen horizontal verläuft. An der ersten Schwenkachse 2 ist schwenkbar eine Platine 3 gelagert. Weiterhin lagert die erste Schwenkachse 2 einen Doppelhebel 9, welcher einen ersten Schenkel 7 und einen zweiten Schenkel 8 umfasst.

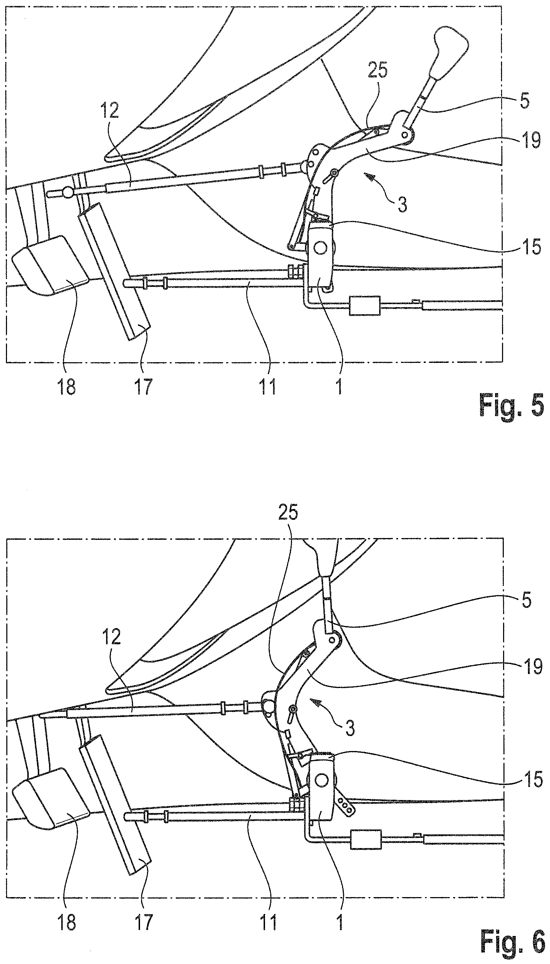

Die Platine 3 ist beispielsweise in Form eines flachen Blechteils ausgebildet und weist einen oberen Bereich 19 auf, welcher relativ zu einem unteren Bereich 21 abgewinkelt ist und mit diesem einen stumpfen Winkel bildet. Wie sich aus der Einbausituation der Fig. 5 und 6 ergibt, erstreckt sich der obere Bereich 19 zum Sitz des Kraftfahrzeugs bzw. zu einer Bedienungsperson hin. Dies ermöglicht es, die gesamte Bedienvorrichtung, insbesondere deren unteren Bereich 21, in einem ausreichenden Abstand vor dem Kraftfahrzeugsitz einzubauen. Hierdurch ergibt sich ein größtmöglicher Verstellweg für den Kraftfahrzeugsitz.

Am oberen Bereich 19 der Platine 3 ist eine zweite Schwenkachse 4 vorgesehen, welche sich im eingebauten Zustand ebenfalls horizontal erstreckt. An dieser zweiten Schwenkachse 4 ist verschwenkbar ein Bedienteil 5 gelagert. Dieses ist in den Figuren nur schematisch dargestellt. Es versteht sich, dass auf das Bedienteil 5 ein ergonomisch dimensionierter Handgriff oder Knopf aufgebracht ist.

Das Bedienteil 5 ist einstückig mit einem ersten Hebel 6 verbunden, der somit um die zweite Schwenkachse 4 verschwenkt wird, wenn das Bedienteil 5 und diese zweite Schwenkachse 4 relativ zu der Platine 3 verschwenkt wird.

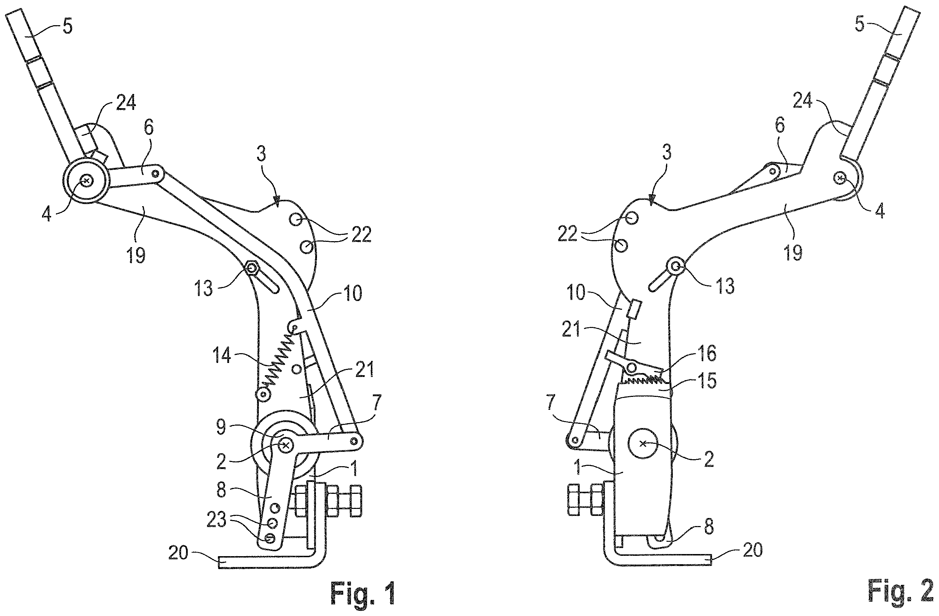

Erfindungsgemäß ist der erste Hebel 6 mit dem ersten Schenkel 7 des Doppelhebels 9 mittels einer Zugstange 10 verbunden, welche, wie insbesondere in Fig. 1 gezeigt, abgewinkelt ausgebildet ist. Durch eine Verwendung einer Zugstange ist es möglich, diese relativ klein zu dimensionieren und auf der dem Kraftfahrzeugsitz abgewandten Seite der Platine anzuordnen.

Der mittlere Bereich der Platine ist mit mehreren Montageausnehmungen 22 versehen, welche eine schwenkbare Anbringung einer zweiten Betätigungsstange 12 ermöglichen, welche mit dem Bremspedal 18 des Kraftfahrzeuges gekoppelt ist. Zur Koppelung mit einem Gaspedal dient eine erste Betätigungsstange 11, welche mit Montageausnehmungen 23 des zweiten Schenkels 8 des Doppelhebels 9 gekoppelt ist.

Die erfindungsgemäße Bedienvorrichtung weist an der Platine 3 ein einstellbares Anschlagelement 13 auf, welches eine Verschwenkung des Bedienteils 5 durch eine Anlage der Zugstange 10 gegen das Anschlagelement 13 begrenzt.

Weiterhin ist die Zugstange 10 über ein Federelement 14 mit der Platine 3 gekoppelt. Das Federelement 14 bringt eine Rückstellkraft auf, um bei Nichtbetätigung des Bedienteils 5 das Gaspedal 17 (s. Fig. 5 und 6) wieder in seine Ausgangsposition zurückzubewegen.

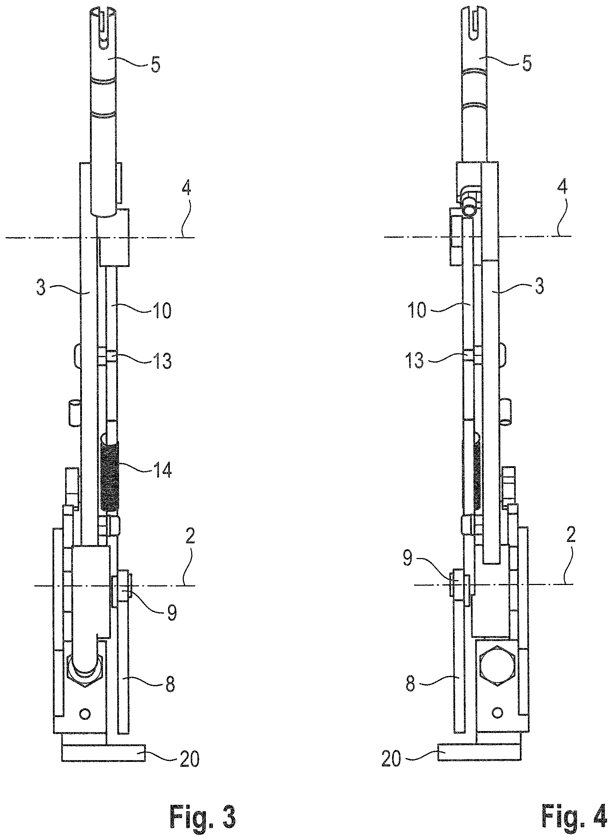

Weiterhin ist, wie in Fig. 2 dargestellt, an dem Sockelteil 1 ein Ratschenbereich 15 ausgebildet, in welchen ein Ratschenelement 16 eingreift, welches an der Platine 3 schwenkbar gelagert ist. Das Ratschenelement 16 ist in den Fig. 1 bis 4 in nicht dargestellter Weise mit einem Betätigungsknopf oder ähnlichem verbunden, welcher an dem Bedienteil 5 angeordnet ist. Somit kann die Bedienungsperson das Bremspedal 18 betätigen und diesen gebremsten Zustand aufrechterhalten, beispielsweise, um einen Vorwahlhebel eines Automatikgetriebes betätigen zu können. Die Fig. 5 und 6 zeigen einen Bowdenzug 25 zur Verbindung des Ratschenelements 16 mit dem Bedienteil 5.

Die Fig. 5 und 6 zeigen einen eingebauten Zustand, wobei in Fig. 5 eine Leerlaufstellung gezeigt ist, während die Fig. 6 eine Vollbremsstellung zeigt. Zum Gasgeben zieht eine Bedienungsperson das Bedienteil 5 zu sich heran. Dies führt zu einer Verschwenkung des Bedienteils 5 um die zweite Schwenkachse 4 relativ zu der Platine 3. Mittels des ersten Hebels 6 wird eine Zugkraft auf die Zugstange 10 aufgebracht, welche wiederum den Doppelhebel 9 verschwenkt. Dies führt zur Aufbringung einer Betätigungskraft 8 auf die erste Betätigungsstange 11, mit welcher das Gaspedal 17 betätigt wird. Hierbei befindet sich die Platine 3 in einer maximal im Uhrzeigersinn (bezogen auf die Fig. 5) um die Schwenkachse 2 verschwenkten Position. Wenn die Bedienungsperson das Kraftfahrzeug abbremsen möchte, so drückt sie auf das Bedienteil 5 und verschwenkt dieses, bezogen auf die Fahrtrichtung des Kraftfahrzeuges, nach vorne. Dabei liegt das Bedienteil 5 gegen einen Anschlag 24, welcher an der Platine 3 ausgebildet ist, an, so dass bei einem Druck auf das Bedienteil 5 die gesamte Platine 3 um die erste Schwenkachse 2 nach vorne verschwenkt wird. Hierdurch wird ein Druck auf die zweite Betätigungsstange 12, welche mit dem Bremspedal gekoppelt ist, aufgebracht.

Erfindungsgemäß ergibt sich somit ein sehr geringer Platzbedarf der Bedienvorrichtung, es ist möglich, diese sehr schmal zu bauen. Durch die abgewinkelte Form der Platine 3 ergibt sich ein großer Freiraum, in welchen der Kraftfahrzeugsitz eingefahren werden kann. Dies ergibt sich insbesondere aus der Darstellung der Fig. 5. Die Verwendung einer Zugstange zur Kopplung des Bedienteils mit dem Gaspedal ermöglicht es, die Bedienvorrichtung zusätzlich kleiner auszubilden.

### Bezugszeichenliste

- 1: Sockelteil
- 2: erste Schwenkachse
- 3: Platine
- 4: zweite Schwenkachse
- 5: Bedienteil
- 6: erster Hebel
- 7: erster Schenkel
- 8: zweiter Schenkel
- 9: Doppelhebel
- 10: Zugstange
- 11: erste Betätigungsstange
- 12: zweite Betätigungsstange
- 13: Anschlagelement
- 14: Federelement
- 15: Ratschenbereich
- 16: Ratschenelement
- 17: Gaspedal
- 18: Bremspedal
- 19: oberer Bereich der Platine 3
- 20: Montagewinkel
- 21: unterer Bereich der Platine 3
- 22: Montageausnehmung
- 23: Montageausnehmung
- 24: Anschlag
- 25: Bowdenzug

## Patentansprüche

1. Bedienvorrichtung eines Kraftfahrzeugs für die manuelle Betätigung eines Gaspedals (17) und eines Bremspedals (18)
mit einem im Bereich einer Sitzbefestigung des Kraftfahrzeugs befestigbaren Sockelteil (1),
mit einer um eine erste Schwenkachse (2) schwenkbar mit ihrem unteren Bereich an dem Sockelteil (1) gelagerten Platine **dadurch gekennzeichnet, dass** die Bedienvorrichtung mit einem um eine zweite Schwenkachse (4) schwenkbar am oberen Bereich der Platine (3) gelagerten Bedienteil (5),
mit einem am Bedienteil (5) befestigten ersten Hebel (6),
mit einem um die erste Schwenkachse (2) schwenkbar an dem Sockelteil (1) gelagerte, einen ersten Schenkel (7) und einen zweiten Schenkel (8) umfassenden Doppelhebel (9),
mit einer den ersten Hebel (6) und den ersten Schenkel (7) des Doppelhebels (9) gelenkig verbindenden Zugstange (10), ausgestaltet ist, wobei der zweite Schenkel (8) des Doppelhebels (9) gelenkig mit einer ersten Betätigungsstange (11), welche mit dem Gaspedal (17) verbindbar ist, gekoppelt ist,
wobei die Platine (3) an ihrem mittleren Bereich gelenkig mit einer zweiten Betätigungsstange (12), welche mit dem Bremspedal (18) verbindbar ist, gekoppelt ist,
wobei die Platine (3) in einer senkrecht zu den Schwenkachsen (2, 4) angeordneten Ebene mit ihrem oberen Bereich (19) abgewinkelt ausgebildet ist, und
wobei die Zugstange (10) abgewinkelt ausgebildet ist.

2. Bedienvorrichtung nach Anspruch 1, **dadurch gekennzeichnet, dass** die Zugstange (10) im Wesentlichen an der konvexen Seite der Platine (3) angeordnet ist.

3. Bedienvorrichtung nach Anspruch 1 oder 2, **dadurch gekennzeichnet, dass** der zweite Schenkel (8) des Doppelhebels (9) zum Sockelteil (1) weisend angeordnet ist und der erste Schenkel (7) des Doppelhebels (9) im Wesentlichen horizontal zum Gaspedal (17) weisend angeordnet ist.

4. Bedienvorrichtung nach einem der Ansprüche 1 bis 3, **dadurch gekennzeichnet, dass** das Sockelteil (1) um eine vertikale Achse schwenkbar montierbar ist.

5. Bedienvorrichtung nach einem der Ansprüche 1 bis 4, **dadurch gekennzeichnet, dass** am mittleren Bereich der Platine (3) ein einstellbares Anschlagelement (13), welches mit der Zugstange (10) in Anlage bringbar ist, angeordnet ist.

6. Bedienvorrichtung nach einem der Ansprüche 1 bis 5, **dadurch gekennzeichnet, dass** die Zugstange (10) mit einem Federelement (14) verbunden ist, welches zur Rückstellung des Bedienteils (5) mit der Platine (3) gekoppelt ist.

7. Bedienvorrichtung nach einem der Ansprüche 1 bis 6, **dadurch gekennzeichnet, dass** an dem Sockelteil (1) ein Ratschenbereich (15) ausgebildet ist, welcher mit einem Ratschenelement (16), welches schwenkbar an der Platine (3) gelagert ist, lösbar in Eingriff bringbar ist.

8. Bedienvorrichtung nach Anspruch 7, **dadurch gekennzeichnet, dass** das Ratschenelement (16) mit einem Betätigungselement des Bedienteils (5) verbunden ist.

9. Bedienvorrichtung nach einem der Ansprüche 1 bis 8, **dadurch gekennzeichnet, dass** die Zugstange (10) und die Platine (3) parallel zueinander angeordnet sind.

10. Bedienvorrichtung nach einem der Ansprüche 1 bis 9, **dadurch gekennzeichnet, dass** der obere Bereich (19) der Platine (3) mit dem unteren Bereich (21) der Platine (3) einen stumpfen Winkel bildet.

## Claims

1. Operating device of a motor vehicle for the manual actuation of an accelerator pedal (17) and a break pedal (18),
with a base part (1) that can be attached in the area of a seat mounting of the motor vehicle,
with a board swivellably mounted about a first pivot axis (2) at the base part (1) with its lower portion, **characterized in that** the operating device is provided with
. a control unit (5) swivellably mounted about a second pivot axis (4) at the upper portion of the board (3),
. a first lever (6) attached to the control unit (5),
. a double lever (9) swivellably mounted about the first pivot axis (2) at the base part (1) and including a first leg (7) and a second leg (8),
. a tie rod (10) flexibly connecting the first lever (6) and the first leg (7) of the double lever (9),
wherein the second leg (8) of the double lever (9) is flexibly coupled to a first actuating rod (11) that can be connected to the accelerator pedal (17),
wherein the board (3) at its central portion is flexibly coupled to a second actuating rod (12) that can be connected to the break pedal (18),
wherein the board (3) is designed angled with its upper portion (19) in a plane arranged perpendicularly to the pivot axes (2, 4), and
wherein the tie rod (10) is designed angled.

2. Operating device in accordance with Claim 1, **characterized in that** the tie rod (10) is arranged substantially at the convex side of the board (3).

3. Operating device in accordance with Claim 1 or 2, **characterized in that** the second leg (8) of the double lever (9) is arranged such that is faces the base part (1) and that the first leg (7) of the double lever (9) is arranged substantially horizontally, facing the accelerator pedal (17).

4. Operating device in accordance with one of the Claims 1 to 3, **characterized in that** the base part (1) can be mounted swivellable about a vertical axis.

5. Operating device in accordance with one of the Claims 1 to 4, **characterized in that** an adjustable abutment element (13), which can be brought into contact with the tie rod (10), is arranged at the central portion of the board (3).

6. Operating device in accordance with one of the Claims 1 to 5, **characterized in that** the tie rod (10) is connected to a spring element (14) that is coupled to the board (3) for resetting the control unit (5).

7. Operating device in accordance with one of the Claims 1 to 6, **characterized in that** a ratchet area (15) is provided on the base part (1), which ratchet area (15) can be releasably brought into engagement with a ratchet element (16) swivellably mounted on the board (3).

8. Operating device in accordance with Claim 7, **characterized in that** the ratchet element (16) is connected to an operating element of the control unit (5).

9. Operating device in accordance with one of the Claims 1 to 8, **characterized in that** the tie rod (10) and the board (3) are arranged in parallel to each other.

10. Operating device in accordance with one of the Claims 1 to 9, **characterized in that** the upper portion (19) of the board (3) forms an obtuse angle with the lower portion (21) of the board (3).

## Revendications

1. Dispositif de commande d'un véhicule à moteur pour l'actionnement manuel d'une pédale d'accélération (17) et d'une pédale de frein (18),
avec une partie de base (1) pouvant être fixée dans la zone d'une fixation de siège du véhicule à moteur,
avec une plaquette montée au niveau de sa zone inférieure sur la partie de base (1) de manière à pouvoir pivoter autour d'un premier axe de pivotement (2), **caractérisé en ce que** le dispositif de commande est équipé
. d'une unité de commande (5) montée sur la zone supérieure de la plaquette (3) de manière à pouvoir pivoter autour d'un second axe de pivotement (4),
. d'un premier levier (6) fixé sur l'unité de commande (5),
. d'un double levier (9) comprenant une première branche (7) et une seconde branche (8), monté sur la partie de base (1) de manière à pouvoir pivoter autour du premier axe de pivotement (2),
. d'une barre de traction (10) reliant de manière articulée le premier levier (6) et la première branche (7) du double levier (9),
sachant que la seconde branche (8) du double levier (9) est couplée de manière articulée à une première tige d'actionnement (11) qui peut être reliée à la pédale d'accélération (17),
sachant que la plaquette (3) est couplée de manière articulée sur sa zone médiane à une seconde tige d'actionnement (12) qui peut être reliée à la pédale de frein (18),
sachant que la plaquette (3) est conçue coudée au niveau de sa zone supérieure (19) dans un plan perpendiculaire aux axes de pivotement (2, 4), et
sachant que la barre de traction (10) est conçue coudée.

2. Dispositif de commande selon la revendication n° 1, **caractérisé en ce que** la barre de traction (10) est disposée essentiellement sur le côté convexe de la plaquette (3).

3. Dispositif de commande selon la revendication n° 1 ou n° 2, **caractérisé en ce que** la seconde branche (8) du double levier (9) est disposée de manière à pointer vers la partie de base (1) et que la première branche (7) du double levier (9) est disposée essentiellement horizontalement et pointant vers la pédale d'accélération (17).

4. Dispositif de commande selon une des revendications n° 1 à n° 3, **caractérisé en ce que** la partie de base (1) peut être montée de manière à pouvoir pivoter autour d'un axe vertical.

5. Dispositif de commande selon une des revendications n° 1 à n° 4, **caractérisé en ce qu'**est disposé dans la zone médiane de la plaquette (3) un élément de butée réglable (13) qui peut être mis en contact avec la barre de traction (10).

6. Dispositif de commande selon une des revendications n° 1 à n° 5, **caractérisé en ce que** la barre de traction (10) est reliée à un élément à ressort (14) qui est couplé à la plaquette (3) pour le rappel de l'unité de commande (5).

7. Dispositif de commande selon une des revendications n° 1 à n° 6, **caractérisé en ce qu'**est constituée sur la partie de base (1) une zone à cliquet (15) qui peut être engagée, de manière déblocable, par un élément de cliquet (16) monté de manière à pouvoir pivoter sur la plaquette (3).

8. Dispositif de commande selon la revendication n° 7, **caractérisé en ce que** l'élément de cliquet (16) est relié à un élément d'actionnement de l'unité de commande (5).

9. Dispositif de commande selon une des revendications n° 1 à n° 8, **caractérisé en ce que** la barre de traction (10) et la plaquette (3) sont disposées parallèlement l'une par rapport à l'autre.

10. Dispositif de commande selon une des revendications n° 1 à n° 9, **caractérisé en ce que** la zone supérieure (19) de la plaquette (3) forme avec la zone inférieure (21) de la plaquette (3) un angle obtus.
